# EUROPEAN PATENT APPLICATION

(11) **EP 2 950 172 A1**
(43) Date of publication of application: **02.12.2015**
(21) Application number: 14380018.3
(22) Date of filing: 29.05.2014
(51) Int. Cl.: G05B 19/05, G05B 19/042, G05B 13/02

(54) **Monitoring system for monitoring the energy consumption parameters of a machine**

(71) Applicant: Ideko, S.Coop., 20870 Elgoibar Guipuzcoa (ES)
(72) Inventor: Eguren, Gorka Unamuno, 20870 Elgoibar (Guipuzcoa) (ES); Olazaguirre, Aratz Olaizola, 20870 Elgoibar (Guipuzcoa) (ES); Durantez, Jon Ander Ortiz, 20870 Elgoibar (Guipuzcoa) (ES)
(74) Representative: Cabinet Plasseraud

(57) **Abstract**

The present invention relates to a monitoring system for monitoring the parameters of a machine comprising:
- a power supply unit (1) for supplying electric power to the components (2) of the machine,
- a control unit (3) of the machine for controlling the operating conditions of the components (2) of the machine,
- a measurement network (4) adapted to measure the energy consumptions of the components (2) of the machine and of the power supply unit (1), and
- a processing unit (5) connected to the measurement network (4) for receiving information about the energy consumptions, and connected to the control unit (3) for receiving information about the operating conditions of the components (2) of the machine, the processing unit (5) being adapted to synchronize the energy consumptions of the components (2) of the machine with the operating conditions that caused the energy consumptions.

## Description

### Field of the Art

The present invention relates to the monitoring of industrial equipment, proposing a monitoring system used for determining the electrical consumption, as well as the consumption of other physical variables (temperature, flow rate, pressure,...), of different critical components of the machine (machining head, cooling circuit,...), and for synchronizing said consumption with the operating conditions of the machine. The system of the invention therefore allows measuring and monitoring the energy expenditure of the required components of the machine; it being possible to know the magnitude of energy expenditure and the operating condition of the machine that caused said energy expenditure, a report with the analysis of the extracted data being obtained in the end to enable maximizing the energy efficiency of the machine.

The invention applies mainly to the sector of industrial machinery (machine tool, furnaces,...), although it may also apply in hydraulic, pneumatic or cooling systems, as well as in buildings and temperature control systems.

### State of the Art

In recent years, an increase in energy cost and environmental legislation has turned energy consumption by industrial equipment into a critical business factor. Therefore, after the raw material and labor costs, energy consumption is one of the most significant costs of the total manufacturing cost of a product. An unexpected increase in energy consumption during product manufacture can cause significant loss in the final profit obtained.

Specifically, in the machine tool sector, measuring the energy consumption of machine tools (lathes, millers, boring cutters, grinders,...) is not a normal practice even though the energy consumption of one of these machines is rather high, even when the machine is in operation but not in the course of machining, i.e., when it is in a stand-by state.

In such machines, taking measurements of energy parameters of a component of the machine on an occasional basis is known, mainly during repair or maintenance tasks, requiring to that end an experienced operator to take manual measurements using specific measurement equipment. However, when the machine is in operation, the energy consumptions of the components of the machine are not continuously monitored, and the specific conditions of the operating process of the machine, which are linked with those energy consumptions, are in no case determined.

Some machine tools incorporate measurement sensors integrated in their structure commonly used to allow the operator to supervise the correct operation of the machine, such as for example, sensors for measuring the energy consumption of a drive shaft of the machine, the flow rate, or machining coolant pumping pressure. Although this solution allows knowing the energy consumption of some components of the machine while it is in operation, the measurements that can be obtained are limited to the sensors integrated therein by the machine manufacturer, and the specific conditions of the operating process of the machine, which are linked with those energy consumptions, are also not determined in any case. Additionally, this is an invasive solution that requires modifying the structure of the machine to enable integrating the measurement sensors, with the subsequent design problems and increased machine cost that it entails.

Additionally, recent legislative regulation defined in ISO 14955 requires machine tool manufacturers to make machine designs that comply with certain standards in order to increase machining process efficiency, to increase energy savings and to reduce the environmental impact caused by the machine.

Is therefore necessary a system that allows continuously monitoring the energy consumptions of the different components of the machine and that allows linking those energy consumptions with the operating conditions of the machine that caused said consumptions, such that a sufficient amount of information is available to enable maximizing the energy efficiency of the machine and therefore reducing its environmental impact.

### Object of the Invention

The object of the invention is to provide a system which allows centralizing, analyzing, and managing all the information about the energy consumptions consumed by critical components of a machine in its operating state, by synchronizing each of said energy consumptions with the operating conditions of the machine that caused said consumptions.

Therefore, an object of the invention is a system providing information to optimize the energy efficiency of the machine, by detecting any type of incidence in energy consumption, and by obtaining information about the operating conditions from the CNC control unit of the machine, in order to thus being able to link each energy consumption with the specific operating condition of the machine that caused said consumption.

In the sense of the present invention, "operating state" is understood as the time instant in which the machine is in operation, i.e., when it is working, or when it is ready to start working (in stand-by).

In the sense of the present invention, "operating conditions of the machine" are understood as the entire sequence of tasks performed by the components of the machine during the operating state. In machine tools controlled mainly with CNC and/or PLC systems, the operating conditions of the machine are directly obtained from the control device, which contains both machine information and workpiece or process information.

In the sense of the present invention, components of the machine are understood as those machine parts that consume energy, such as the machining head, the drive shafts, the cooling system, the cutting fluid pumping system, or the chip collection system in a machine tool, for example.

The monitoring system of the invention comprises:
- a power supply unit supplying electric power to the components of the machine,
- a control unit of the machine controlling the operating conditions of the components of the machine,
- a measurement network adapted to measure the energy consumptions of the components of the machine and of the power supply unit, and
- a processing unit connected to the measurement network for receiving information about the energy consumptions, and connected to the control unit for receiving information about the operating conditions of the components of the machine, the processing unit being adapted to synchronize the energy consumptions of the components of the machine with the operating conditions that caused the energy consumptions.

The measurement network comprises a first measurement device adapted to measure electrical parameters of the energy consumption of the power supply unit, and second measurement devices adapted to measure electrical parameters of the energy consumption of the components of the machine. It has been envisaged that the measurement network incorporates a second measurement device for each component of the machine.

The first measurement device is connected to the input of the power line of the power supply unit, and the second measurement devices are connected to the shunts of the power line shunting the electric power to each component of the machine. The connection of the measurement devices with the power line and with the shunts is established by means of transformers that are responsible for reducing the current to a value allowed for the measurement devices.

Among the electrical parameters measured by the measurement devices, the following are found:
- Voltage between phases;
- Currents per phase;
- Active power per phase and total active power;
- Reactive power per phase and total reactive power;
- Apparent power per phase and total apparent power;
- Frequency;
- Power factor;
- Harmonic distortion for voltage and current per phase;
- Individual harmonics.

The measurement devices of the measurement network communicate by means of a MODBUS TCP/IP fieldbus, where the first measurement device is configured to act as the master node of the fieldbus, and the second measurement devices as slave nodes of the fieldbus. Additionally, the processing unit communicates with the measurement network and with the control unit of the machine by means of an Ethernet communication network. To that end, the first measurement device of the measurement network is adapted to act as information gateway between the MODBUS TCP/IP fieldbus and the Ethernet communication network.

Additionally, the measurement network incorporates sensors for measuring analog signals such as temperature, flow rate, pressure, noise, acceleration, vibration, humidity, or percentage of atmospheric particles. In that case, the measurement network incorporates means for converting the analog signals to the MODBUS TCP/IP communication network protocol.

A portable system primarily intended for measuring and diagnosing the energy expenditure of a machine tool is therefore obtained whereby the energy consumption of the components of the machine can be calculated, and said consumption can be synchronized with the operating conditions under which the machine was operating when said consumption occurred.

### Description of the Drawings

Figure 1 shows a block diagram with the elements making up the monitoring system of the invention.
Figure 2 shows a possible embodiment of the monitoring system of the invention.
Figure 3 shows the monitoring system connected to a machine tool.

### Detailed Description of the Invention

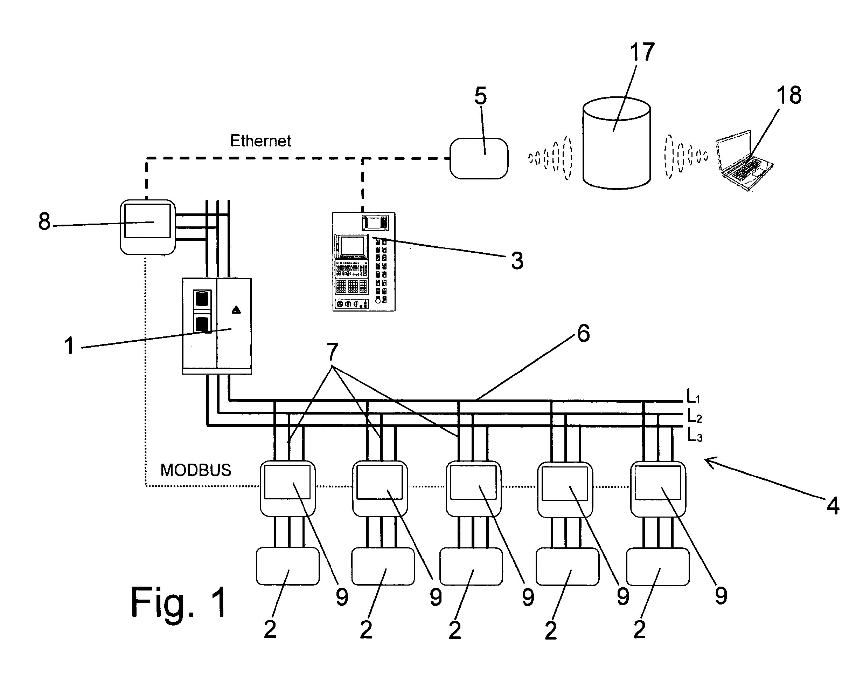

Figure 1 shows a block diagram of the monitoring system for monitoring the parameters of a machine according to the invention. The monitoring system comprises a power supply unit (1) responsible for supplying the necessary electric power for the correct operation of the components (2) of a machine, a control unit (3) responsible for controlling the operating conditions of the components (2) of the machine, a measurement network (4) configured for measuring the energy consumptions of the components (2) of the machine, and a processing unit (5) which is connected to the control unit (3) and to the measurement network (4) for receiving information about the operating conditions of the machine, as well as information about the energy consumptions of the components (2) of the machine. The processing unit (5) is particularly adapted to synchronize the energy consumptions of the components (2) of the machine with the operating conditions of the machine that caused the energy consumptions, such that each energy consumption of a component (2) of the machine is synchronized with the operating condition of the machine that caused said consumption.

By way of non-limiting example, in a machine tool, the components (2) of the machine to be monitored can be the machine axis regulator supply source, the main machining head regulator, the head cooling system, the cutting fluid transfer and pumping system and the chip collector. In any case, all those components (2) of the machine the energy consumption of which is considered to have having a significant impact can be monitored.

The power supply unit (1) of the machine corresponds to the connection cabinet of the machine which is connected to the power mains and in which the connection points necessary for connecting the components (2) of the machine are arranged. Figure 1 shows, by way of an illustrative and not at all limiting example, a power line (6) with three phases (L1, L2, L3) from which the necessary shunts (7) for the components (2) of the machine are established.

The measurement network (4) incorporates measurement devices (8, 9) adapted to measure electrical parameters of the energy consumptions of the machine. As seen in Figure 1, the measurement network (4) comprises a first measurement device (8) adapted to measure electrical parameters of the energy consumption of the power supply unit (1), and second measurement devices (9) adapted to measure electrical parameters of the energy consumptions of the components (2) of the machine. The first measurement device (8) is connected to the input of the power line (6), i.e., to the input line of the connection cabinet of the machine, whereas the second measurement devices (9) are connected to the respective shunts (7) of the power line (6), as many second measurement devices (9) as components (2) of the machine are to be monitored being provided.

The connection with the input of the power line (6) is established primarily to monitor the power supply that reaches the power supply unit (1) from the main distribution network supply, such that possible fluctuations produced in the main distribution network do not distort the measurements of the energy consumptions of the components (2) of the machine taken by means of the second measurement devices (9).

It has been envisaged that the measurement devices (8, 9) are electrical network analyzers used for measuring the electrical parameters of the electrical consumptions of the components (2) of the machine such as, voltage between phases, currents per phase, active power per phase and total active power, reactive power per phase and total reactive power, apparent power per phase and total apparent power, frequency, power factor, harmonic distortion for voltage and current per phase, individual harmonics, as well as mean, maximum and minimum values of all these electrical parameters.

The measurement devices (8,9) are connected to the power supply unit (1) and to the components (2) of the machine by means of transformers reducing the current to a value allowed for the measurement devices (8,9). The components (2) of the machine require different amounts of energy to operate, such as 600A, 300A, or 50A, for example, whereas the measurement devices (8, 9) work in the order of 5 A, so that in order to be able to measure the energy consumption within a suitable resolution, transformers reducing the current to the order of 5 A are required.

The measurement devices (8, 9) of the measurement network (4) are connected by means of a fieldbus. Establishing the connection by means of a MODBUS TCP/IP-type fieldbus has been envisaged since the MODBUS communication protocol is widely used in the machine tool sector and it facilitates communication between different pieces of equipment (the MODBUS fieldbus is depicted in the drawings by means of a thin dotted line). The fieldbus has a master-slave architecture, where the first measurement device (8) is configured to operate as the master node of the fieldbus, and the second measurement devices (9) operate as the slave nodes of the fieldbus.

The communication between the measurement network (4), the control unit (3) and the processing unit (5) is established by means of an Ethernet communication network (depicted in the drawings by means of a thick dash line). In this case, in order to transfer the information between the MODBUS TCP/IP fieldbus and the Ethernet communication network, it has been envisaged that the first measurement device (8) of the measurement network (4) is adapted to act as communication gateway between the MODBUS and Ethernet protocols.

The control unit (3) of the machine corresponds to the CNC (Computerized Numerical Control) of the machine which contains all the control information about the operating conditions of the machine. The CNC contains the workpiece program, in which there are included all the instructions for controlling the movement functions of the machine axes while machining the workpiece; likewise, the CNC also contains the information about non-movement functions, such as information about sensors, contactors, electrovalves, etc.

Therefore, on the one hand, the processing unit (5) receives information about the energy consumptions of the components (2) of the machine from the measurement devices (8,9) of the measurement network (4), and on the other hand, it receives the information about the operating conditions of the machine from the control unit (3), the processing unit (5) thus synchronizes all the received information and determines what the operating conditions of the machine were when the energy consumption of the components (2) occurred.

For example, when machining head energy consumption is being monitored, by means of the respective measurement device (9) of that component (2), the energy being consumed is known, and by means of the control unit (3), the line of code of the workpiece program that is being executed in that moment is known, such that if, for example, the machining head is performing a deburring task, the energy consumption must be greater than when it is performing a finishing task, the processing unit (5) thus being able to determine any anomaly in the energy consumption of that component (2).

Additionally, the measurement network (4) incorporates sensors (10) for measuring analog signals of other energy consumptions of the machine other than the electrical consumptions measured by the measurement devices (8,9). Among the analog signals measured with the sensors (10), temperature, flow rate, pressure, noise, acceleration, vibration, humidity, or percentage of atmospheric particles, are found.

For each type of analog signal to be measured, a specific sensor (10), such as temperature transducers, pressure transducers, flowmeters, accelerometers, etc., for example, is used. The sensors (10) are placed directly in the location of the machine to be monitored, and are connected to the measurement network (4), without having to modify the structure of the machine for integration, such that by using the sensors (10) different analog signals of the machine can be measured in a less invasive manner.

When using the sensors (10), the measurement network (4) incorporates a module (11) configured for converting the analog signals measured by the sensors (10) to MODBUS protocol, such that these signals can then be sent to the processing unit (5) for synchronization with the operating conditions of the machine. Therefore, for example, the flow rate of coolant being used, or the magnitude of vibration being produced in a part of the machine can be known, and that analog signal can be synchronized with the machining operation being performed, such that it can be detected whether or not the coolant consumption or the vibrations produced are normal and consistent with the machining operation being performed.

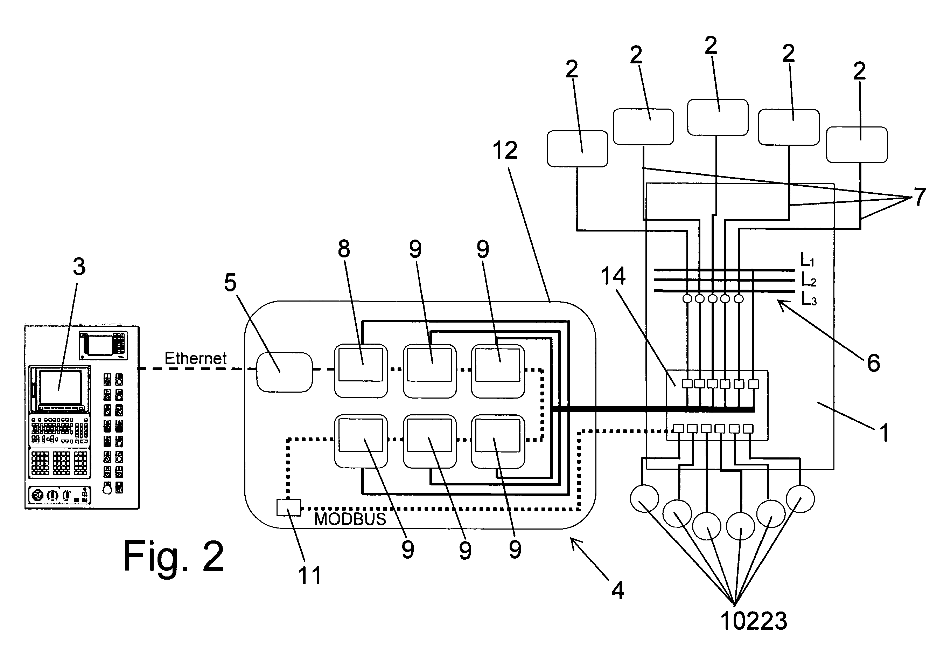

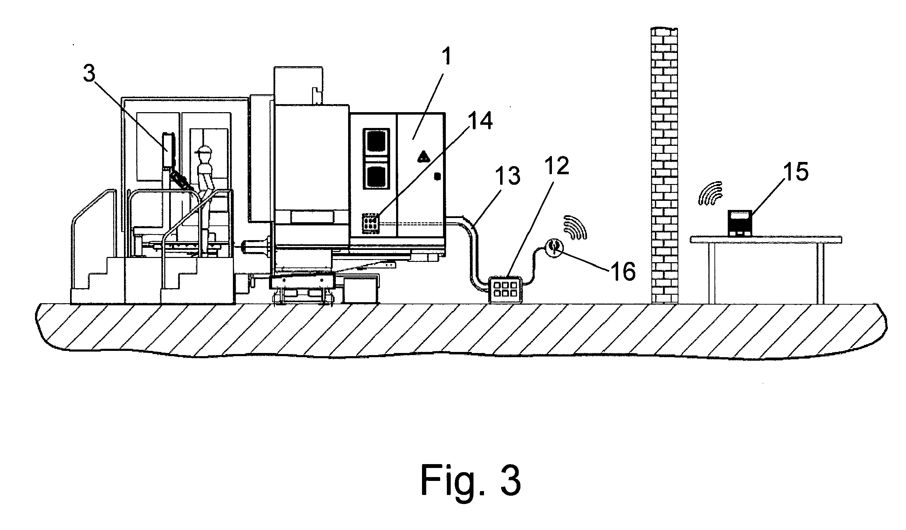

As seen in Figures 2 and 3, the measurement devices (8,9) of the measurement network (4) are incorporated in a box (12) facilitating portability and allowing quick connection with the power supply unit (1) and the control unit (3) through a data cable (13) introduced through the lower part of the power supply unit (1).

Inside the power supply unit, i.e., in the connection cabinet of the machine, there is arranged a connection box (14) which is used for establishing the connection of the measurement devices (8,9) with the shunts (7) of the power line (6) to which the components (2) of the machine are connected for receiving power supply.

As seen in the embodiment of Figure 2, the processing unit (5) is incorporated in the box (12), although it is also possible for the processing unit (5) to be arranged in a location outside the box (12), such as shown in the embodiment of Figure 3, for example, where the processing unit (5) can be part of remote equipment (15) which communicates with the box (12) by means of WIFI connection (16) or another similar data connection.

As shown in Figure 1, the data obtained by the processing unit (5) can be stored in the database of a server (17) which can be accessed by means of a personal computer (18) in order to be able to obtain a final report with the analysis of the energy consumption data of the machine associated with the operating conditions of same.

It has also been envisaged that the server (17) can send energy consumptions data of different machines obtained by means of other similar monitoring systems, such that the energy consumption of a group of machines that are part of an installation can be monitored.

## Claims

1. A monitoring system for monitoring the parameters of a machine to determine the energy consumption of the components (2) of the machine in its operating state, **characterized in that** it comprises:
- a power supply unit (1) for supplying electric power to the components (2) of the machine,
- a control unit (3) of the machine for controlling the operating conditions of the components (2) of the machine,
- a measurement network (4) adapted to measure the energy consumptions of the components (2) of the machine and of the power supply unit (1), and
- a processing unit (5) connected to the measurement network (4) for receiving information about the energy consumptions, and connected to the control unit (3) for receiving information about the operating conditions of the components (2) of the machine, being the processing unit (5) adapted to synchronize the energy consumptions of the components (2) of the machine with the operating conditions that caused the energy consumptions.

2. The monitoring system for monitoring the parameters of a machine according to claim 1, **characterized in that** the measurement network (4) comprises:
- a first measurement device (8) adapted to measure electrical parameters of the energy consumptions of the power supply unit (1), and
- second measurement devices (9) adapted to measure electrical parameters of the energy consumptions of the components (2) of the machine.

3. The monitoring system for monitoring the parameters of a machine according to the preceding claim, **characterized in that** the measurement network (4) incorporates a second measurement device (9) for each component (2) of the machine.

4. The monitoring system for monitoring the parameters of a machine according to claim 2, **characterized in that** the measured electrical parameters are:
• Voltage between phases;
• Currents per phase;
• Active power per phase and total active power;
• Reactive power per phase and total reactive power;
• Apparent power per phase and total apparent power;
• Frequency;
• Power factor;
• Harmonic distortion for voltage and current per phase;
• Individual harmonics.

5. The monitoring system for monitoring the parameters of a machine according to claim 2, **characterized in that** the measurement devices (8, 9) of the measurement network (4) are communicated by means of a MODBUS TCP/IP fieldbus.

6. The monitoring system for monitoring the parameters of a machine according to the preceding claim, **characterized in that** the first measurement device (8) is configured to act as the master node of the fieldbus, and the second measurement devices (9) as slave nodes.

7. The monitoring system for monitoring the parameters of a machine according to claim 1, **characterized in that** the processing unit (5) communicates with the measurement network (4) and with the control unit (3) of the machine by means of an Ethernet communication network.

8. The monitoring system for monitoring the parameters of a machine according to claims 5, 6 and 7, **characterized in that** the first measurement device (8) is adapted to act as information gateway between the MODBUS TCP/IP fieldbus and the Ethernet communication network.

9. The monitoring system for monitoring the parameters of a machine according to claim 1, **characterized in that** the measurement network (4) further comprises sensors (10) located in the machine for measuring analog signals.

10. The monitoring system for monitoring the parameters of a machine according to the preceding claim, **characterized in that** the measured analog signals are temperature, flow rate, pressure, noise, acceleration, vibration, humidity, or percentage of atmospheric particles.

11. The monitoring system for monitoring the parameters of a machine according to claims 5 and 9, **characterized in that** the measurement network (4) incorporates means for converting the analog signals to the MODBUS TCP/IP communication network protocol.

12. The monitoring system for monitoring the parameters of a machine according to claim 2, **characterized in that** the first measurement device (8) is connected to the input of the power line (6) of the power supply unit (1), and the second measurement devices (9) are connected to the shunts (7) of the power line (6) supplying electric power to the components (2) of the machine.

13. The monitoring system for monitoring the parameters of a machine according to the preceding claim, **characterized in that** the connection of the measurement devices (8,9) with the power line (6) and with the shunts (7) is established by means of transformers reducing the current to a value allowed for the measurement devices (8,9).

14. The monitoring system for monitoring the parameters of a machine according to the preceding claim, **characterized in that** the measurement devices (8,9) of the measurement network (4) are integrated in a portable box (12).
